# EUROPÄISCHE PATENTSCHRIFT

(11) **EP 0 882 410 B1**
(45) Veröffentlichungstag und Bekanntmachung des Hinweises auf die Patenterteilung: **11.12.2002**
(21) Anmeldenummer: 98110186.8
(22) Anmeldetag: 04.06.1998
(51) Int. Cl.: A23N 1/00

(54) **Citruspresse**
Citrus fruit juicing machine
Presse-agrumes

(30) Priorität: 06.06.1997 DE 29709881 U
(43) Veröffentlichungstag der Anmeldung: 09.12.1998
(73) Patentinhaber: Brinkmann, Georg, 49176 Hilter (DE)
(72) Erfinder: Brinkmann, Georg, 49176 Hilter (DE)
(74) Vertreter: Sparing - Röhl - Henseler Patentanwälte

(56) Entgegenhaltungen:
- EP-A- 0 343 488
- DE-C- 833 897
- DE-C- 871 216
- US-A- 2 114 218
- US-A- 3 267 838

## Beschreibung

Die Erfindung betrifft eine Citruspresse nach dem Oberbegriff des Anspruchs 1.

Citruspressen der hier in Betracht zu ziehenden Art haben insbesondere im Gastronomiegewerbe, etwa für den Restaurant-Betrieb von Hotels, umfängliche Anwendung gefunden, deren Gäste häufig Wert darauf legen, frisch gepreßten Orangensaft zu erhalten. Auch in anderen Fällen ist es von Interesse, Zitronensaft oder Grapefruitsaft frisch und nicht etwa aus in Flaschen gelagerten Vorräten zu erhalten.

Aus der EP 0 343 488 A2 ist eine Citruspresse bekannt, bei der zwei drehende und damit auch Fruchtfleisch ausbringende Preßwerkzeuge in die Fruchthälften eingreifen, wobei diese Preßwerkzeuge mittels eines Schlittens axial vorwärts und rückwärts verfahrbar sind. Die Preßwerkzeuge weisen jeweils einen Preßwerkzeugkopf auf, der federvorgespannt auf einem Preßwerkzeugschaft sitzt. Die Federvorspannung drückt den Preßwerkzeugkopf gegenüber dem Preßwerkzeugschaft nach oben und erlaubt während des Preßvorgans ein geringfügiges Absenken des Preßwerkzeugschaftes für ein schonendes Auspressen und zur Vermeidung eines Angreifens der Schale der Citrusfrüchte, da sonst Bitterstoffe und für den Verzehr nicht geeignete Bestandteile aus der Schale in den gepreßten Saft hineingelangen und diesen verderben würden.

Aus der DE 871 216C ist eine Vorrichtung zum Entsaften von Citrusfrüchten bekannt, die höhenbewegliche, in sich umlaufende Bohrköpfe aufweist, die bei ihrer Abwärtsbewegung auf die in auf einem Transportband angeordnete Schalen eingelegte Halbfrüchte zur Einwirkung kommen und so die Halbfrüchte aushöhlend entsaften. Mehrere von einem Motor über eine gemeinsame Welle angetriebene Bohrköpfe sind auf einer Platte angeordnet, die von Spiralfedern getragen wird. Die Bohrköpfe werden von im Inneren angeordnete, von der Bohrkopfwelle getragenen Spiralfedern nachgiebig unter Spannung gehalten und vermögen so sich jeder Größe und Form der Furchthälften anzupassen.

Aus der US 3,267,838 ist eine Vorrichtung zum Entsaften von Citrusfrüchten bekannt, bei der Preßwerkzeuge in die Citrushälften gepreßt werden unter gleichzeitiger Ausführung einer langsamen Drehung, wodurch das Handauspressen von Citrushälften simuliert werden soll.

Als nachteilig hat sich jedoch erwiesen, daß bekannte Citruspressen verschleißanfällig sind und wegen der uneinheitlichen Schalendicke bei Citrusfrüchten immer wieder die Schale der Citrusfrüchte angreifen. Aufgabe der Erfindung ist es daher, eine Citruspresse nach dem Oberbegriff des Anspruchs 1 zu schaffen, die konstruktiv einfach ist und die Gefahr des Angreifens der Schale durch drehende Preßwerkzeuge verringert.

Diese Aufgabe wird durch die Merkmale des Anspruchs 1 gelöst.

Hierdurch wird erreicht, daß der Vorschub der Preßwerkzeuge abgefedert wird, und zwar losgelöst von den drehenden Preßwerkzeugen selbst. Man erhält dadurch ein schonendes, druckarmes Auspressen, so daß die Gefahr einer Schalenangriffs deutlich verringert ist.

Durch die Zwischenschaltung einer Druckfederung zwischen Schubeinrichtung und Schlitten wird erreicht, daß dann, wenn die Preßwerkzeuge auf das Fruchtfleisch einer Fruchthälfte treffen und damit ein Widerstand der Schubeinrichtung entgegenwirkt, die Schubeinrichtung zu einer Komprimierung einer Druckfedereinrichtung führt. Die Entspannung der Druckfedereinrichtung kann dazu benutzt werden, die Preßwerkzeuge schonungsarm in die Fruchthälften sich hineinarbeiten zu lassen.

Für dieses Hineinarbeiten der Preßwerkzeuge in die Fruchthälften zum Auspressen derselben kann die Citruspresse derart ausgestaltet werden, daß der Vorschub der Schubeinrichtung durch einen wählbaren vorschubseitigen Anschlag begrenzt wird. Dieser vorschubseitige Anschlag ist so einstellbar, daß die Preßwerkzeuge nur mit einer wählbaren Tiefe in die Fruchthälften eindringen können. Die Druckfederung ermöglicht dann, daß die Schubeinrichtung von Beginn des Auspreßvorganges an zu einer Komprimierung der Druckfederung führt und das Einarbeiten der Preßwerkzeuge in die Fruchthälften unter Abbau dieser aufgebauten Federvorspannung erfolt und damit die Preßwerkzeuge schließlich die vorbestimmte Tiefe erreichen. Das Auspressen der Fruchthälften erfolgt somit immer druckärmer, je weiter die Preßwerkzeuge sich einer Fruchtschale nähern. Ferner ist ein Vortrieb der Preßwerkzeuge in die Fruchthälften zu Beginn des Auspressens verlangsamt, wenn die Vorschubeinrichtung eine Druckfederkomprimierung aufbaut.

Insbesondere als vorteilhaft hat sich dabei herausgestellt, daß eine konstruktive Trennung einer Druckfederung von den drehenden Preßwerkzeugen selbst die Drehbewegung der Preßwerkzeuge gleichmäßiger macht.

Durch diese Abfederung des Vorschubes kann sichergestellt werden, daß die Anpreßkraft begrenzt wird, so daß nur das weichere Innere einer Citrusfrucht, nicht jedoch die Schale mit Preßwerkzeugen angegriffen wird. Insofern wird eine gute Ausbeute an Saft und Fruchtfleisch und auch eine hohe Qualität des Saftes erreicht, ohne daß die Gefahr besteht, regelmäßig oder auch nur sporadisch ein Preßgut zu erhalten, welches aufgrund von Bitterstoffen Anlaß zur Beanstandung gibt oder gar mit einem Gehalt an zum Verzehr nicht geeigneten Stoffen gesundheitsschädlich bedenklich wäre.

Vorzugsweise ist ferner vorgesehen, daß die Vorschubeinrichtung über eine Zeitsteuerung betätigbar ist. Diese Zeitsteuerung kann in Abhängigkeit von der Festigkeit des Fruchtfleisches derart eingestellt werden, daß die Schubvorrichtung an einem vorschubseitigen Anschlag so lange gehalten wird, bis die Druckfederung des Vorschubes durch Eindringen der umlaufenden Preßwerkzeuge in die Fruchthälften auf eine wählbare Restvorspannung entspannt ist. Das gewünschte Druckprofil eines Auspreßvorganges mit einem stärkeren Auspreßdruck zu Beginn des Auspreßvorganges und einem sich verringernden Auspreßdruck bis zum Ende des Auspreßvorganges, kann auf diese Weise in Abhängigkeit von der Fruchtfleischqualität eingestellt werden.

Insbesondere dient die Zeitsteuerung dazu, den Auspreßvorgang rechtzeitig zu beenden, wenn die Preßwerkzeuge ihre Endstellung in axialer Vorschubrichtung erreicht haben, wobei dies dann der Fall ist, wenn die Druckfederung wählbar entspannt ist, d.h. vollständig entspannt oder mit einer wählbaren Restvorspannung entspannt ist.

Der Schlitten ist vorzugsweise auf zwei parallelen Führungsstangen verfahrbar angeordnet, auf denen auch Schubblöcke der Schubeinrichtung angeordnet sind. Zur Betätigung dieser Schubblöcke kann eine Schubstange angreifen, die an ihrem anderen Ende an einer umlaufenden Betätigungsscheibe befestigt ist für eine Vorwärts- und Rückwärtsbewegung der Schubblöcke.

Weitere Ausgestaltungen der Erfindung ergeben sich aus den Unteransprüchen. Ein Ausführungsbeispiel der Erfindung ist in der Zeichnung dargestellt und wird nachfolgend näher beschrieben. In der Zeichnung zeigen:

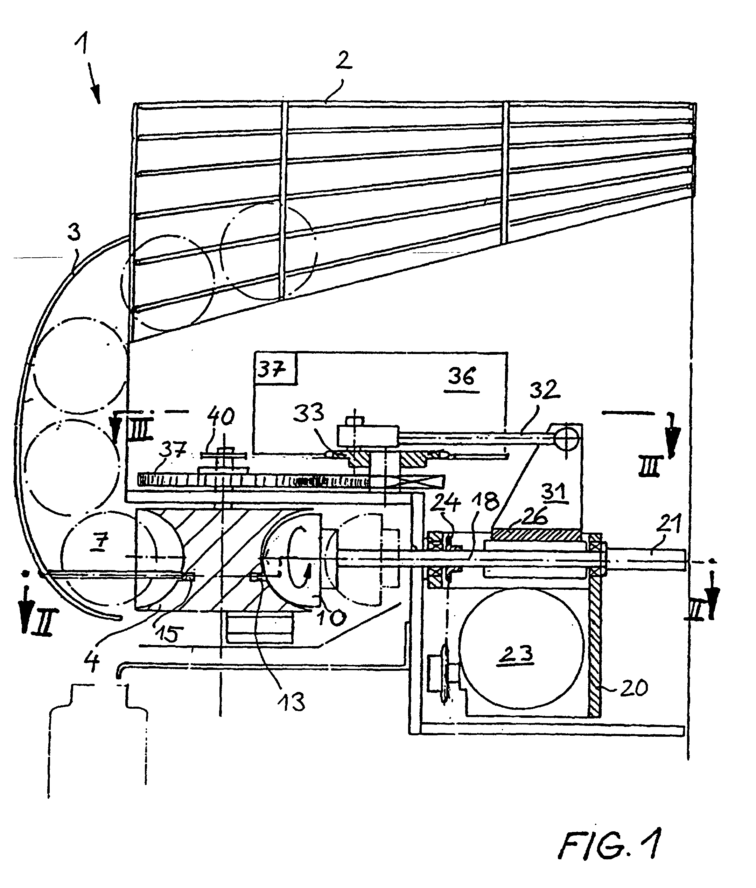

- Fig. 1: einen senkrechten Schnitt durch eine Citruspresse nach Linie I-I in Fig. 3,
- Fig. 2: Schnitt nach Linie II-II in Fig. 1, und
- Fig. 3: Schnitt nach Linie III-III in Fig. 1.

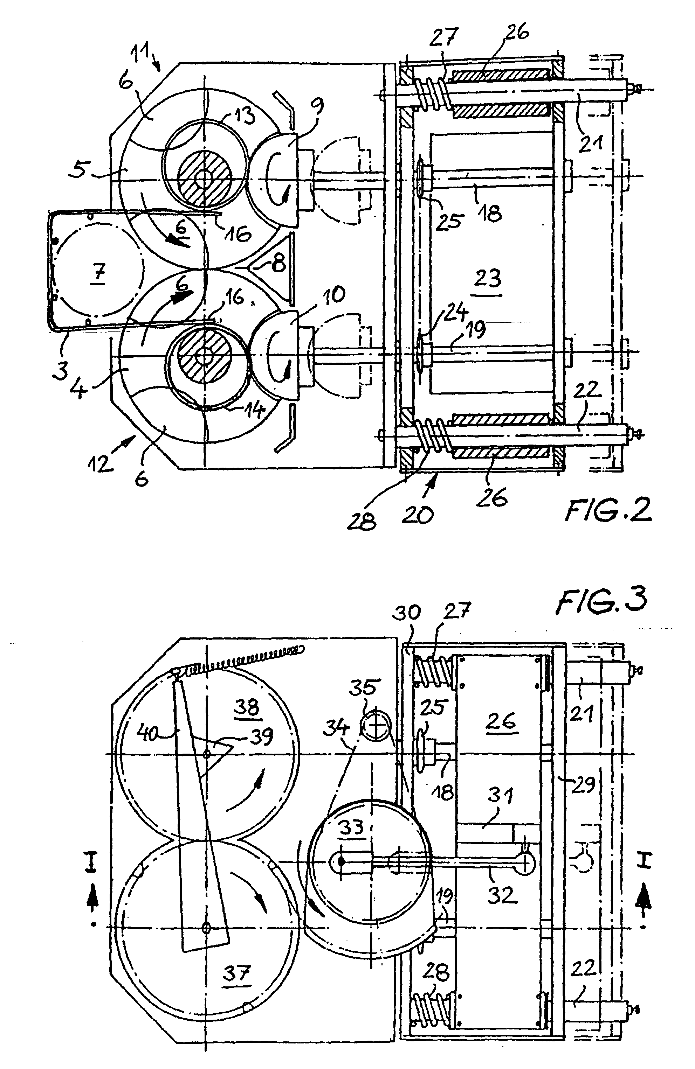

Die in der Zeichnung insgesamt mit 1 bezeichnete, in den Figuren 2 und 3 nur hinsichtlich der näher betrachteten Teile dargestellte Citruspresse, insbesondere für Orangen und Pampelmusen, weist oberseitig einen Korb für frische, ganze Früchte auf, die erforderlichenfalls über eine Taumelscheibe oder dergleichen Bewegungsmittel vereinzelt und bewegt, nacheinander in einen Fallschacht 3 und an dessen unteren Ende in den Wirkungsbereich einer Citruspresse 1 mit mindestens einer Preßeinheit mit einer Zuführeinrichtung und mit einem Preßwerk gelangen. Die Zuführeinrichtung umfaßt zwei Ronden 4, 5, die als Muldenträger ausgebildet sind und umfangsseitig eine oder mehrere Mulden 6 aufweisen, die etwa eine halbe Frucht aufnehmen. Jede der Ronden 4, 5 weist vorzugsweise drei umfangsseitig gleichmäßig beabstandete Mulden 6 auf, die auch aufgrund einer synchronisierten Stellung und Bewegung der Ronden 4, 5 untereinander spiegelbildlich zueinander liegen. Die Bewegung der Ronden 4, 5 erfolgt spiegelbildlich-symmetrisch, so daß eine in Fig. 2 strichpunktierte angedeutete Citrusfrucht 7 zwischen zwei einander benachbarte Mulden 6 der Ronden 4, 5 einläuft (Aufnahmestellung) und dann bei weiterer schrittweiser Bewegung ein feststehendes Messer 8 passiert (Schneidstellung), um dann, in zwei Fruchthälften halbiert, nach einer 120°-Drehung beider Ronden 4, 5 eine zueinander parallele Ausrichtung der Mulden (Preßstellung) einzunehmen, wo parallel zueinander zwei Auspreßwerkzeuge 9, 10 in die Mulden einfahren und die darin enthaltenen Fruchthälften auspressen.

Eine weitere Drittel-Drehung der Ronden 4, 5 führt zu einer Auswerfstellung 11, in der die ausgepreßten Fruchthälften herausfallen und zum Abfall gelangen. Damit sich die ausgepreßten Fruchthälften nicht durch Verkleben oder Verklemmen festsetzen, werden diese durch Auswerferringe 13, 14 aus den Mulden 6 herausbewegt, die innerhalb der Ronden in Schlitzen 15 geführt sind und radial ein erhebliches Bewegungsspiel haben, wobei sie durch elastische Andrücker 16, hier von Stabenden des Fallschachts 3 gebildet, die auf der der Auswerfposition gegenüberliegenden Seite gegen den jeweiligen Auswerferring 13 bzw. 14 andrücken, ausgeschoben werden.

Die Auspreßwerkzeuge 9, 10, sogenannte "Ausdrehsterne", sind gemäß der Zeichnung vorderseitig etwa halbkugelig ausgebildet und darüber hinaus mit mehr oder weniger axial verlaufenden Rillen und/oder Rippen (nicht dargestellt) ausgestattet, so daß sie bei Drehung um jeweilige Antriebsachsen 18, 19 mit dem Dreheingriff nicht nur eine Quetschwirkung, sondern auch eine Reib- oder Schälwirkung entfalten, mit der Fruchtfleisch aus den Fruchthälften herauszuholen ist. Die Rillen und/oder Rippen der Auspreßwerkzeuge 9, 10 können hierzu auch Schneidkanten aufweisen.

Die Preßwerkzeuge 9, 10 werden dabei drehend angetrieben um jeweils eine von zwei parallelen Achsen und insgesamt aus einer strichpunktiert eingezeichneten Lage in die Mulde hinein- und wieder zurückgefahren. Dabei sind sie auf einem insgesamt mit 20 bezeichneten kastenartigen Schlitten gelagert, der auf zwei feststehenden, parallel zu den Antriebsachsen 18, 19 verlaufenden Führungsstangen 21, 22 verschieblich gelagert ist und einen Getriebemotor 23 sowie einen Kettenantrieb für die Wellen 18, 19 mit Kettenrädern 24, 25 trägt.

Dieser Schlitten 20 mitsamt (Werkzeug-)Antrieb 23, Antriebsachsen 18, 19 und Preßwerkzeugen 9, 10 wird auf den Führungsstangen 21, 22 zum Auspressen zweier anstehender Fruchthälften vor- und zurückgeschoben, und zwar über gleichfalls auf den Führungsstangen 21, 22 gelagerte Schubblöcke, die hier eine Traverse 26 (Fig. 3) bilden, die rückseitig direkt und vorderseitig über zwei jeweils auf den Führungsstangen 21, 22 gelagerte Druckfedern 27, 28 an Stirnwänden 29 bzw. 30 des Schlittens 20 drückend anliegt. Eine von der Traverse 26 gebildete Schubeinrichtung greift demnach vorschubseitig druckgefedert an dem Schlitten 20 an.

Diese Vorschubbewegung ist allerdings nicht zwangsgeführt, sondern abgefedert. Die Druckfedern 27, 28 drücken sich dann, wenn die Preßwerkzeuge 9, 10 auf einen Widerstand, wie das Fruchtfleisch einer Fruchthälfte, treffen, zusammen. Die von der Schubeinrichtung aufgebaute Federvorspannung kann bei ihrer Entspannung einen Auspreßdruck liefern, der auf die Preßwerkzeuge 9,10 wirkt, während diese sich in die Fruchthälften einarbeiten. Die Druckfederung besitzt deshalb vorzugsweise eine Federkraft, die auf einen Fruchtfleisch bedingten Widerstand in einer Fruchthälfte anspricht.

Gemäß einem bevorzugten Ausführungsbeispiel beträgt die aufgebaute Federkraft bei einem Federweg von 10 mm 300-550 N.

Eine Entspannungsweglänge der Druckfedern 27, 28 wird vorzugsweise derart gewählt, daß die Preßwerkzeuge 9, 10 bei einer Entspannung der Druckfedern 27, 28 das Fruchtfleisch einer Fruchthälfte vollständig ausgepreßt haben. Dazu besitzen die Druckfedern 27, 28 vorzugsweise einen Federweg, der eine Länge aufweist, die einer Muldentiefe abzüglich Schalendicke einer Fruchthälfte entspricht.

Zur Einstellung eines Schubweges des Schlittens 20 arbeitet die Schubeinrichtung, hier die Traverse 26, zwischen einem wählbaren vorschubseitigen Anschlag und einem wählbaren rückschubseitigen Anschlag. Der vorschubseitige Anschlag wird derart gewählt, daß die Preßwerkzeuge 9, 10 nach Entspannung der Druckfedern 27, 28 oder bei einer wählbaren Restvorspannung mit einer vorbestimmbaren Tiefe in die Mulden der Preßstellung und damit die Fruchthälften eingreifen.

Die Druckfedern 27, 28 bewirken, daß der Vorschub der Preßwerkzeuge 9,10 sich verlangsamt, wenn diese auf die Fruchthälften treffen, da dann der weitere Vorschub aufgrund des von den Fruchthälften erzeugten Widerstandes zu einer Komprimierung der Druckfedern 27, 28 führt, bis der vorschubseitige Anschlag erreicht ist. Da die sich drehenden Preßwerkzeuge 9, 10 unter der Federkraftwirkung der Druckfedern 27, 28 in die Fruchthälften hineinarbeiten und damit ein weiterer Vorschub des Schlittens 20 auftritt, der einer Entspannungsweglänge der Druckfedern 27, 28 folgt, wird schließlich eine endgültige Eindringtiefe der Preßwerkzeuge 9, 10 erreicht. Durch Wahl der Druckfedern 27, 28 hinsichtlich Federkraft und Federung wird somit Einfluß genommen auf Vorschubweg und Vorschubgeschwindigkeit der Preßwerkzeuge 9, 10.

Die Vorschubeinrichtung arbeitet über die Traverse 26. Die Traverse 26 wird ihrerseits durch einen an einem Steg 31 der Traverse 26 angreifende Koppelstange 32 vor- und rückwärtsbewegt, die exzentrisch an einer Zahnscheibe 33 angeordnet ist, die ihrerseits über einen Kettentrieb 34 und ein Kettenritzel 35 von einem Antriebsmotor 36 aus bewegt wird. Dieser Antriebsmotor kann durchlaufend oder auch intermittierend betätigt werden.

Gleichzeitig ist die Zahnscheibe 33 Antrieb für die Ronden 4, 5, indem sie in eine im Drehsinn fest mit der Ronde 4 verbundene Zahnscheibe 37 eingreift, die ihrerseits mit einer fest mit der Ronde 5 verbundene gleiche Zahnscheibe 38 kämmend eingreift, so daß beide synchron gegensinnig drehen und die Ronden 4, 5 entsprechend bewegen.

Die Zahnscheibe 33 weist allerdings nur etwa an einem Drittel ihres Umfangs eine Verzahnung auf, beim sonstigen Umlauf ist sie außer Verzahnungseingriff. Dies bewirkt, daß die Zahnscheiben 37, 38 bei jeder Umdrehung der Zahnscheibe 33 nur eine Drittelumdrehung ausführen. Eine genaue Festlegung der Umdrehungsschritte und eine Arretierung bei fehlendem Antriebseingriff erfolgt über ein dreieckiges Rastrad 39, welches mit der Zahnscheibe 38 und der Ronde 5 starr und koaxial verbunden ist und einen über eine Zugfeder hiergegen angedrückten Rasthebel 40, der koaxial an der Zahnscheibe 37 gelagert ist. Wenn die Zahnscheibe 33 eine 120°-Drehung der Zahnscheiben 37 und 38 und der zugehörigen Ronden bewirkt, dreht sich das Rastrad 39 entsprechend, drückt zunächst den Hebel 40 mit der benachbarten Ecke des Dreiecks nach außen und hält dann in der neuen Position mit Anlage einer Dreiecksseite am Hebel 40.

Weiterhin ist ein Antrieb 36 für die Vorschubeinrichtung über eine Zeitsteuerung 37 betätigbar. Dies erlaubt, die Vorschubeinrichtung, d.h. hier die Traverse 26, während eines wählbaren Zeitabschnitts an dem vorschubseitigen Anschlag zu halten. Dadurch wird den Druckfedern 27, 28 ein wählbarer Zeitabschnitt zur Verfügung gestellt, während dem sie sich entspannen können entsprechend dem Vortrieb der Preßwerkzeuge 9, 10 in den Fruchthälften.

Diese Zeitsteuerung erlaubt eine Anpassung an die Fruchtfleischqualität, insbesondere deren Festigkeit. So kann etwa bei besonders festfleischigen Früchten ein langes Halten der Ronden 4, 5 in der Preßstation (und damit natürlich auch in den anderen Stationen) vorgesehen werden, um das Fruchtfleisch gründlich herauszudrehen. Umgekehrt kann bei weichen Früchten ein sofortiges Rückfahren der Preßwerkzeuge angezeigt sein. Hierzu kann am Gerät ein Stellknopf an der Vorderseite vorgesehen werden, der die Preßzeit über ein elektrisches Potentiometer oder ein anderes geeignetes Stellelement stufenlos oder in Stufen einzustellen erlaubt.

Die erfindungsgemäße Druckfederung erlaubt ergänzend eine Abfederung der Preßwerkzeuge 9, 10 beim Auftreffen auf die Schale einer Fruchthälfte. Sollten die Preßwerkzeuge gegen die Schale verfahren werden, wird ein Angriff der Schale durch die Abfederung gemildert.

## Patentansprüche

1. Citruspresse mit mindestens einer Preßeinheit mit einer Zuführeinrichtung mit zwei symmetrisch zueinander aus einer einander zugewandten Aufnahmestellung über eine Schneidstellung in eine Preßstellung beweglichen Muldenträgern (4, 5) mit jeweils zumindest einer eine Fruchthälfte aufnehmenden Mulde (6) und mit zwei um jeweils eine von zwei parallelen Achsen umlaufenden Preßwerkzeugen (9, 10), die an einem die Preßwerkzeuge (9, 10) in der Preßstellung in die Mulden (6) mittels einer Schubeinrichtung (26) vor- und rückschiebbaren Schlitten (20) gelagert sind, **dadurch gekennzeichnet, daß** die Schubeinrichtung vorschubseitig druckgefedert an dem Schlitten (20) angreift und die Druckfederung eine Federkraft besitzt, die auf einen Fruchtfleisch bedingten Widerstand in einer Fruchthälfte anspricht.

2. Citruspresse nach Anspruch 1, **dadurch gekennzeichnet, daß** die Druckfederung einen Federweg besitzt, der eine Länge bis zu einer Muldentiefe abzüglich einer Schalendicke einer Fruchthälfte aufweist.

3. Citruspresse nach Anspruch 1 oder 2, **dadurch gekennzeichnet, daß** für die Einstellung eines Schubweges des Schlittens (20) die Schubvorrichtung zwischen einem wählbaren vorschubseitigen Anschlag und einem wählbaren rückschubseitigen Anschlag arbeitet.

4. Citruspresse nach Anspruch 3, **dadurch gekennzeichnet, daß** der vorschubseitige Anschlag derart wählbar ist, daß die Preßwerkzeuge (9, 10) bei einer wählbaren Restvorspannung der Druckfederung mit einer vorbestimmbaren Tiefe in die Mulden (6) eingreifen.

5. Citruspresse nach einem der Ansprüche 1 bis 4, **dadurch gekennzeichnet, daß** die Vorschubeinrichtung über eine Zeitsteuerung betätigbar ist.

6. Citruspresse nach Anspruch 5, **dadurch gekennzeichnet, daß** die Zeitsteuerung derart einstellbar ist, daß die Schubvorrichtung (26) an dem vorschubseitigen Anschlag gehalten wird, bis die Druckfederung durch Eindringen der umlaufenden Preßwerkzeuge (9, 10) in die Fruchthälften wählbar entspannt ist.

7. Citruspresse nach einem der Ansprüche 1 bis 6, **dadurch gekennzeichnet, daß** der Schlitten (20) auf parallel zu den zentralen Achsen der Preßwerkzeuge (9, 10) verlaufenden Führungsstangen (21, 22) verschieblich gelagert ist.

8. Citruspresse nach Anspruch 7, **dadurch gekennzeichnet, daß** die Schubeinrichtung auf den Führungsstangen (21, 22) sitzende Schubblöcke umfaßt, die einerseits in Vorschubrichtung über jeweils eine auf der Führungsstange (21, 22) sitzende Druckfeder (27, 28) an einer vorschubseitigen Seite des Schlittens (20) angreifen und andererseits in Rückschubrichtung an einer rückschubseitigen Seite des Schlittens (20) angreifen.

9. Citruspresse nach Anspruch 8, **dadurch gekennzeichnet, daß** die Schubblöcke von einer endseitig auf den Führungsstangen (21, 22) sitzenden Traverse (26) gebildet werden.

10. Citruspresse nach einem der Ansprüche 1 bis 9, **dadurch gekennzeichnet, daß** die Mulden (6) umfangsseitig in zwei sich um feste Achsen drehenden Muldenträgern (4, 5) angeordnet sind und schrittweise zwischen einer Aufnahmestellung, einer Preßstellung und einer Auswerfstellung umlaufen, die jeweils um einen Umlaufwinkel von 120° gegeneinander versetzt sind, wobei die Muldenträger (4, 5) in der Preßstellung parallel zueinander ausgerichtete Mulden (6) aufweisen.

11. Citruspresse nach Anspruch 10, **dadurch gekennzeichnet, daß** jeder Muldenträger (4, 5) drei untereinander um 120° versetzt angeordnete Mulden (6) aufweist.

12. Citruspresse nach Anspruch 10 oder 11, **dadurch gekennzeichnet, daß** die Vor- und Rückschubbewegung des Schlittens (20) mit der Drehbewegung der Muldenträger (4, 5) gekoppelt ist.

13. Citruspresse nach einem der Ansprüche 1 bis 12, **dadurch gekennzeichnet, daß** der Antrieb (23) für die umlaufenden Preßwerkzeuge (9, 10) auf dem Schlitten (20) angeordnet ist.

14. Citruspresse nach einem der Ansprüche 1 bis 13, **dadurch gekennzeichnet, daß** die Muldenträger (4, 5) einen steuerbaren Antrieb (23) aufweisen, der koppelbar ist mit einem steuerbaren Antrieb (36) der Schubvorrichtung.

## Claims

1. Citrus-fruit press with at least one pressing unit with a feed device having two hollow-receptacle carriers (4, 5), which can be moved symmetrically with respect to one another from a mutually facing receiving position, via a cutting position, into a pressing position and each has at least one fruit-half-receiving hollow receptacle (6), and with two pressing tools (9, 10), which rotate about in each case one of two parallel spindles and are mounted on a carriage (20) which can advance and return the pressing tools (9, 10), in the pressing position, into and from the hollow receptacles (6) by means of a thrusting device (26), **characterized in that** the thrusting device acts on the carriage (20) by way of compression springs on the advancement side and the compression-spring arrangement has a spring force which responds to a resistance in a fruit half which is caused by the flesh of the fruit.

2. Citrus press according to Claim 1, **characterized in that** the length of the excursion of the compression-spring arrangement is equal to the depth of a hollow receptacle minus the thickness of the skin of a fruit half.

3. Citrus-fruit press according to one of Claims 1 or 2, **characterized in that**, for the purpose of adjusting a thrust path of the carriage (20), the thrusting device operates between a selectable advancement-side stop and a selectable return-side stop.

4. Citrus-fruit press according to Claim 3, **characterized in that** the advancement-side stop can be selected such that, with selectable residual prestressing of the compression-spring arrangement, the pressing tools (9, 10) engage in the hollow receptacles (6) to a predeterminable depth.

5. Citrus-fruit press according to one of Claims 1 to 4, **characterized in that** the advancement device can be actuated via a time-control means.

6. Citrus-fruit press according to Claim 5, **characterized in that** the time-control means can be adjusted such that the thrusting device (26) is retained on the advancement-side stop until the compression-spring arrangement has been selectably relieved of pressure by the rotating pressing tools (9, 10) penetrating into the fruit halves.

7. Citrus-fruit press according to one of Claims 1 to 6, **characterized in that** the carriage (20) is mounted displaceably on guide rods (21, 22) which run parallel to the central axes of the pressing tools (9, 10).

8. Citrus-fruit press according to Claim 7, **characterized in that** the thrusting device comprises thrust blocks which are seated on the guide rods (21, 22) and, on the one hand, act, in the advancement direction, on an advancement side of the carriage (20) via in each case one compression spring (27, 28) which is seated on the guide rod (21, 22) and, on the other hand, act, in the return direction, on a return side of the carriage (20).

9. Citrus-fruit press according to Claim 8, **characterized in that** the thrust blocks are formed by a crossmember (26) which is seated on the ends of the guide rods (21, 22).

10. Citrus-fruit press according to one of Claims 1 to 9, **characterized in that** the hollow receptacles (6) are arranged circumferentially in two hollow-receptacle carriers (4, 5), which rotate about fixed spindles, and said hollow receptacles rotate in a stepwise manner between a receiving position, a pressing position and an ejecting position, these positions each being offset by an angle of rotation of 120° with respect to one another, it being the case that, in the pressing position, the hollow-receptacle carriers (4, 5) have hollow receptacles (6) aligned parallel to one another.

11. Citrus-fruit press according to Claim 10, **characterized in that** each hollow-receptacle carrier (4, 5) has three hollow receptacles (6), which are offset by 120° with respect to one another.

12. Citrus-fruit press according to Claim 10 or 11, **characterized in that** the advancement and return movement of the carriage (20) is coupled to the rotational movement of the hollow-receptacle carriers (4, 5).

13. Citrus-fruit press according to one of Claims 1 to 12, **characterized in that** the drive (23) for the rotating pressing tools (9, 10) is arranged on the carriage (20).

14. Citrus-fruit press according to one of Claims 1 to 13, **characterized in that** the hollow-receptacle carriers (4, 5) have a controllable drive (23) which can be coupled to a controllable drive (36) of the thrusting device.

## Revendications

1. Presse-agrumes comprenant au moins une unité de pressage équipée d'un dispositif d'amenée possédant deux supports d'alvéoles (4, 5) qui sont mobiles symétriquement l'un par rapport à l'autre pour passer d'une position de réception dans laquelle ils sont dirigés l'un vers l'autre, à une position de pressage en passant par une position de coupe, et qui comprennent chacun au moins une alvéole (6) qui reçoit un demi-fruit et deux outils de pressage (9, 10) qui tournent respectivement autour de deux axes parallèles, qui sont montés sur un chariot (20) pouvant être avancé et reculé au moyen d'un dispositif de poussée (26) qui, dans la position de pressage, engage les outils de pressage (9, 10) dans les alvéoles (6), **caractérisé en ce que** le dispositif de poussée attaque le chariot (20) par un dispositif à ressorts de compression en avant, et le dispositif à ressorts de compression possède une force élastique qui correspond à une résistance due à la pulpe du fruit qui est développée dans un demi-fruit.

2. Presse-agrumes selon la revendication 1, **caractérisé en ce que** le dispositif à ressorts de compression possède un débattement élastique qui présente une longueur allant jusqu'à une profondeur d'alvéole, diminuée d'une épaisseur de peau d'un demi-fruit.

3. Presse-agrumes selon la revendication 1 ou 2, **caractérisé en ce que**, pour le réglage d'une course de poussée du chariot (20), le dispositif de poussée opère entre une butée côté avance pouvant être choisie et une butée côté recul pouvant être choisie.

4. Presse-agrumes selon la revendication 3, **caractérisé en ce que** la butée côté avance peut être choisie de manière que les outils de pressage (9, 10) s'engagent dans les alvéoles (6) à une profondeur pouvant être prédéterminée en réponse à une précontrainte résiduelle du dispositif à ressorts qui peut être choisie.

5. Presse-agrumes selon une des revendications 1 à 4, **caractérisé en ce que** le dispositif d'avance peut être actionné par l'intermédiaire d'une commande du temps.

6. Presse-agrumes selon la revendication 5, **caractérisé en ce que** la commande du temps peut être réglée de manière que le dispositif de poussée (26) soit arrêté à une butée côté avance jusqu'à ce que le dispositif à ressorts de compression soit détendu à un degré pouvant être choisi par l'enfoncement des outils de pressage rotatifs (9, 10) dans les demi-fruits.

7. Presse-agrumes selon l'une des revendications 1 à 6, **caractérisé en ce que** le chariot (20) est monté mobile en translation sur des barres de guidage (21, 22) qui s'étendent parallèlement aux axes centraux des outils de pressage (9, 10).

8. Presse-agrumes selon la revendication 7, **caractérisé en ce que** le dispositif de poussée comprend des blocs de poussée montés sur les barres de guidage (21, 22), et qui, d'une part, attaquent, dans la direction d'avance, une face côté avance du chariot (20) par l'intermédiaire d'un ressort de compression respectif (27, 28) monté sur la barre de guidage (21, 22) et, d'autre part, attaquent dans le sens du recul, une face côté recul du chariot (20).

9. Presse-agrumes selon la revendication 8, **caractérisé en ce que** les blocs de poussée sont formés par une traverse (26) montée à ses extrémités sur les barres de guidage (21, 22).

10. Presse-agrumes selon l'une des revendications 1 à 9, **caractérisé en ce que** les alvéoles (6) sont disposés, sur la périphérie, dans deux supports d'alvéoles (4, 5) qui tournent autour d'axes fixes et tournent par pas entre une position de réception, une position de pressage et une position d'éjection, qui sont décalés l'un par rapport à l'autre, chacun d'un angle de rotation de 120°, les supports d'alvéoles (4, 5) présentant des alvéoles (6) qui sont orientées parallèlement entre eux dans la position de pressage.

11. Presse-agrumes selon la revendication 10, **caractérisé en ce que** chaque support d'alvéoles (4, 5) présente trois alvéoles (6) disposés décalés entre eux de 120°.

12. Presse-agrumes selon la revendication 10 ou 11, **caractérisé en ce que** le mouvement d'avance et de recul du chariot (20) est couplé au mouvement de rotation des supports d'alvéoles (4, 5).

13. Presse-agrumes selon l'une des revendications 1 à 12, **caractérisé en ce que** l'entraînement (23) pour les outils de pressage rotatifs (9, 10) est agencé sur le chariot (20).

14. Presse-agrumes selon l'une des revendications 1 à 13, **caractérisé en ce que** les supports d'alvéoles (4, 5) présentent un entraînement (23) pouvant être commandé qui peut être accouplé à un entraînement (36) pouvant être commandé du dispositif de poussée.
